# FASCICULE DE BREVET EUROPEEN

(11) **EP 1 345 058 B1**
(45) Date de publication et mention de la délivrance du brevet: **22.09.2010**
(21) Numéro de dépôt: 03290591.1
(22) Date de dépôt: 11.03.2003
(51) Int. Cl.: G02B 6/44

(54) **Procédé d'identification de fibres optiques dans un cable**
Verfahren zur Identifizierung von Glasfaser in einem Kabel
Identification method for optical fibres in a cable

(30) Priorité: 14.03.2002 FR 0203166
(43) Date de publication de la demande: 17.09.2003
(73) Titulaire: Draka Comteq B.V., 1083 HJ Amsterdam (NL)
(72) Inventeur: Andrieu, Xavier, 91220 Bretigny sur Orge (FR); Libert, Jean-François, 62360 Condette (FR); Decaumont, Anne, 91220 Bretigny sur Orge (FR)
(74) Mandataire: Blokland, Arie

(56) Documents cités:
- FR-A- 2 648 270
- US-A- 5 111 523
- US-A- 5 796 905
- US-A1- 2001 048 797
- PATENT ABSTRACTS OF JAPAN vol. 2000, no. 07, 29 septembre 2000 (2000-09-29) & JP 2000 105328 A (SIECOR OPERATIONS LLC), 11 avril 2000 (2000-04-11) -& US 6 370 304 B1 9 avril 2002 (2002-04-09)

## Description

La présente invention concerne l'identification de fibres optiques, par exemple disposées dans un câble optique. Un câble optique peut contenir une grande quantité de fibres optiques, plusieurs centaines par exemple pour un câble de transmission d'un système optique.

Une fibre optique est classiquement composée d'un coeur optique, ayant pour fonction de transmettre et éventuellement d'amplifier un signal optique, entouré d'une gaine optique, ayant pour fonction de confiner le signal optique dans le coeur. La fibre optique est en outre protégée par un revêtement, généralement en résine polymère, destiné d'une part à protéger la fibre lors de sa manipulation et de son installation dans un système optique et d'autre part à limiter les dégradations de la fibre et les dérives de ses caractéristiques optiques avec le temps.

Une fibre optique individuelle, placée dans un câble optique appartenant à une ligne de transmission d'un système optique donné, doit pouvoir être identifiée, soit pour des besoins de raccordement lors de l'installation du système, soit pour des besoins de contrôle lors de tests ou d'une reconfiguration du système. En outre, dans le cas d'un système optique de transmission dense (connu sous le terme de DWDM pour Dense Wavelength Division Multiplexing), la gestion de la dispersion chromatique de chaque fibre optique d'une ligne de transmission devient critique et il est important que chaque fibre d'un câble soit précisément identifiée avec ses propriétés optiques de dispersion, car une erreur de raccordement n'est pas tolérable dans un tel système.

Ainsi, il existe un réel besoin pour une identification rapide et certaine de chaque fibre optique disposée dans un câble optique.

Une solution utilisée classiquement pour identifier les fibres dans un câble, en particulier pour le raccordement du câble à un réseau d'accès, consiste à utiliser un code de couleurs. Le revêtement polymère de chaque fibre est coloré, aux moins sur une portion en extrémité de fibre, chaque couleur correspondant à un type de fibre. La coloration peut être apposée sur le revêtement de la fibre directement lors de la formulation de la résine par ajout de pigments ou de colorants dans la résine ou par apposition d'une couche colorée sur le revêtement. Ainsi, une douzaine de couleurs sont standardisée.

Cette technique comporte néanmoins des inconvénients. En effet, le nombre de couleurs pouvant être utilisé pour colorer la résine du revêtement est limité et insuffisant pour répondre aux besoins d'identification de toutes les fibres disposées dans un câble. En général, les fibres à revêtement colorées sont disposées dans des tubes de différentes couleurs à l'intérieur du câble, ce qui permet d'augmenter le nombre de combinaison d'identification par les couleurs. Cette technique reste cependant lourde à mettre en oeuvre et propice aux erreurs de manipulation et d'interprétation.

Une autre technique connue pour identifier des fibres optiques dans un câble consiste à ajouter des anneaux colorés sur les extrémités des fibres. Cette solution, éventuellement combinée à la précédente, permet d'augmenter le nombre d'identifications possibles, mais reste néanmoins insuffisante. De plus, l'ajout d'un anneau autour de la fibre apporte une contrainte mécanique qui peut modifier les propriétés optiques locales de la fibre, ce qui peut être nuisible lorsque les fenêtres de transmission sont très resserrées.

En outre, aucune des solutions connues pour l'identification de fibres optiques dans un câble ne permet de marquer un historique précis de la fibre ou d'identifier distinctement différentes portions d'une même fibre. La coloration du revêtement ou l'apposition d'un anneau sont révélateur du type de fibre ou d'un état de la fibre à un instant donné, mais ne représente pas une éventuelle évolution des caractéristiques de la fibre.

De plus, les codes de couleurs ne peuvent pas prévenir les erreurs d'interprétation par les techniciens manipulateurs du câble qui doivent se reporter à des tableaux de correspondance pour reconnaître les fibres colorées.

Le document JP 2000/05329 décrit une fibre selon le préambule de la revendication 1.

L'invention a pour objectif de répondre aux problèmes et limitations de l'art antérieur précédemment mentionnés.

A cet effet, l'invention propose de réaliser l'identification d'une fibre, directement sur son revêtement, par un marquage laser d'un élément colorant disposé dans le revêtement. Un tel marquage au laser permet avantageusement d'inscrire un code identifiant sur la fibre par une modification localisée des propriétés colorantes de l'élément colorant.

L'invention propose également un procédé d'identification de fibres optiques disposées dans un câble, qui soit facile, fiable et performant.

L'invention concerne plus spécifiquement une fibre optique selon la revendication 1.

L'élément colorant est disposé dans une couche intermédiaire située entre une couche de revêtement primaire et une couche de revêtement secondaire, la couche de revêtement secondaire étant transparente au faisceau laser. La couche de revêtement secondaire protège la couche de revêtement intermédiaire.

Selon une caractéristique, l'élément colorant est un colorant thermo-chrome, tel qu'un matériau à base de cyanine ou de phtalocyanine.

Selon une caractéristique, l'élément colorant constitue 0.1 à 10 % en poids de l'ensemble des compositions des couches de revêtement.

Selon les applications, les données inscrites sont des codes barres ou des codes visuels, permanentes et/ou codées et/ou incrémentales.

L'invention se rapporte également à un câble optique comportant au moins une fibre optique selon l'invention.

L'invention concerne en outre, un procédé d'identification de fibre optique selon l'invention, **caractérisé en ce qu**'il comporte une étape d'inscription de données par marquage laser, la couche de revêtement intermédiaire de la fibre étant irradiée par un faisceau laser modifiant les propriétés colorantes de l'élément colorant.

Selon les applications, l'étape d'inscription de données est reproduite sur une même fibre plusieurs fois, sur des zones adjacentes d'une même fibre ou sur des portions différentes d'une même fibre.

Selon une caractéristique, le procédé selon l'invention comporte en outre une étape de lecture des données inscrites sur la couche de revêtement inermédiaire de la fibre par un lecteur laser.

L'invention se rapporte également à un procédé d'identification de fibres optiques disposées dans un câble selon l'invention, chaque fibre comportant une couche de revêtement intermédiaire comportant un élément colorant, **caractérisé en ce qu**'il comporte une étape d'inscription de données par marquage laser, la couche de revêtement intermédiaire d'au moins une desdites fibres étant irradiée par un faisceau laser modifiant les propriétés colorantes de l'élément.

L'invention présente de nombreux avantages par rapport aux techniques connues d'identification de fibres. En effet, l'invention permet une identification précise des fibres et de portions de fibres d'un même câble, les combinaisons de données d'un code (de type code barre ou morse) étant largement supérieures aux combinaisons des codes de couleurs (de type une couleur par fibre).

En outre, les erreurs d'interprétation du marquage sont limitées par la possibilité d'utiliser un lecteur laser pour l'identification des fibres marquées avec un code barre.

De plus, le marquage de la fibre selon l'invention n'endommage pas le polymère du revêtement et ne perturbe pas les propriétés optiques de la fibre.

Les autres particularités et avantages de l'invention ressortiront plus clairement à la lecture de la description qui suit.

L'objectif de la présente invention est de permettre l'identification précise d'une fibre optique ou d'une portion de fibre, en particulier lorsqu'elle est placée dans un câble.

Ainsi, selon l'invention, un élément colorant est disposé dans la couche de revêtement intermédiaire de la fibre, cet élément colorant étant choisi tel que ses propriétés colorantes sont aptes à être modifiées par irradiation laser.

Le marquage laser, c'est à dire l'irradiation d'un élément colorant par un faisceau laser, est déjà connu pour l'identification de câbles, électriques ou optiques. Le marquage laser sur un câble est largement utilisé. Ainsi, par exemple, le brevet US 5 111 523 expose un câble à revêtement marquable par laser. Le revêtement du câble est composé d'une couche externe et d'une couche interne, une couche étant teintée par rapport à l'autre. Un premier faisceau laser détruit la couche externe pour faire apparaître la couche interne colorée différemment de la couche externe et un second faisceau laser irradie le colorant de la couche interne pour modifier ses propriétés colorantes. Ainsi, les combinaisons possibles de codes de couleurs sont augmentées.

Néanmoins, le marquage laser d'un câble n'implique pas les mêmes contraintes que le marquage laser d'une fibre optique. En effet, les épaisseurs de revêtement ne sont pas comparables et le revêtement d'un câble peut être localement endommagé sans perturber considérablement les propriétés électriques ou optiques des fils ou fibres qu'il contient.

Le marquage laser, , c'est à dire l'irradiation d'un élément colorant par un faisceau laser, est déjà connu pour l'identification de fibre optiques. Le brevet US 6370304 utilise un tel marquage dans la couche de revêtement secondaire commune des fibres optiques d'un ruban. Mais ces fibres optiques n'ont qu'une couche primaire et une couche secondaire commune à toutes les fibres optiques, le marquage s'effectuant à la surface extérieure de la couche de revêtement secondaire commune. Cette couche est relativement épaisse car si elle était relativement mince, les agressions du milieu extérieur l'effaceraient ou au moins l'endommageraient rapidement ; elle ne permet pas une inscription relativement rapide des données, comme lors d'une inscription en ligne à grande vitesse, elle demande une puissance relativement importante de laser pour l'écriture, les données inscrites sont localisées avec relativement peu de précision, et les modifications du milieu ambiant sont relativement importantes. La fibre optique et le procédé selon l'invention améliorent ces défauts.

La présente invention propose de réaliser un tel marquage laser sur le revêtement d'une fibre optique, ce qui implique une maîtrise particulière du faisceau laser de marquage. Ainsi, la couche de revêtement intermédiaire de la fibre est localement irradiée par un faisceau laser dont la longueur d'onde d'émission, la puissance et la fréquence sont choisis pour permettre une modification des propriétés colorantes de l'élément colorant et pour ne pas endommager le polymère du revêtement. En outre, ces trois paramètres associés au faisceau laser sont combinés avec un temps d'exposition limité d'une zone élémentaire d'inscription (environ 1 µs pour 100µm de longueur de revêtement).

Selon une particularité avantageuse de l'invention, l'irradiation laser du revêtement n'endommage aucune couche dudit revêtement, mais modifie simplement les propriétés colorantes d'une des couches du revêtement.

Le marquage laser appose un code identifiant sur le revêtement d'une fibre ou d'une portion de fibre donnée. Le code apposé peut être un code visuel, tel qu'une succession de traits longs, courts, horizontaux, verticaux, ou un code barre. Ce code représente des données propres à ladite fibre ou portion de fibre et peut être interprété par des techniciens à l'aide de tables de correspondance ou par un lecteur de codes barres, en particulier pour certaines applications pour lesquelles l'information d'identification est codée. Le marquage laser est en général définitif et ne se détériore pas avec le temps.

Selon une application particulière, le code apposé sur le revêtement de la fibre peut être incrémental, c'est à dire qu'il comporte une racine propre à la fibre et un incrément correspondant à différentes portions de ladite fibre et/ou à différentes étapes de fabrication ou d'utilisation de ladite fibre.

L'élément colorant peut être composé de tout matériau dont les propriétés de coloration peuvent être modifiées par irradiation laser, le choix de la longueur d'onde du laser étant alors fixé selon le type de colorant incorporé dans le revêtement de la fibre à identifier. L'élément colorant doit également rester inerte lors du procédé de fabrication de la fibre et en particulier lors de l'étape de séchage de la résine du revêtement (pour laquelle la température peut atteindre 120°C).

Selon un mode de réalisation possible, l'élément colorant est un colorant thermo-chrome irréversible contenant un matériau à base de cyanine ou de phtalocyanine.

L'élément colorant est disposé dans une couche intermédiaire, relativement fine, inférieure à 100nm, située entre une couche de revêtement primaire (ou interne) et une couche de revêtement secondaire (ou externe), la couche de revêtement secondaire étant alors transparente au faisceau laser.

Ainsi, selon l'invention, le marquage et l'identification de fibres peuvent être faits comme suit.

Une étape d'inscription de données est réalisée sur une fibre optique par irradiation de la couche de revêtement intermédiaire de la fibre par un faisceau laser. A cet effet, la couche de revêtement intermédiaire comporte un élément colorant absorbant à la longueur d'onde du laser de marquage. Cette étape de marquage peut être effectuée à différents stades de fabrication et/ou d'utilisation de la fibre. En particulier, cette étape d'inscription de données peut être reproduite sur une même fibre plusieurs fois, pour identifier différentes portions d'une même fibre et/ou pour faire apparaître un historique de l'évolution d'une fibre ou portion de fibre.

L'inscription de données sur la fibre peut être faite par le fabricant de la fibre et/ou par le fabricant du câble optique incorporant de telles fibres et/ou par l'installateur du câble dans un système optique.

Une étape de lecture des données inscrites sur le revêtement de la fibre permet d'identifier ladite fibre ou une portion de celle-ci. Selon un mode de réalisation, la lecture du code identifiant inscrit sur la fibre peut être effectuée au moyen d'un lecteur laser. Ainsi, les risques d'erreur de manutention et d'installation peuvent être considérablement réduits.

De même, un câble optique comportant une pluralité de fibres comportant chacune une couche de revêtement intermédiaire comportant un élément colorant, peut subir une étape d'inscription de données sur la couche de revêtement intermédiaire d'au moins une desdites fibres par marquage laser, et une autre étape de lecture des données inscrites sur la couche de revêtement intermédiaire d'au moins une desdites fibres pour identification.

Ainsi, les informations relatives à chaque fibre optique d'un câble sont inscrites directement sur ladite fibre. Ces informations peuvent contenir un historique, puisque des inscriptions successives sont possibles sur une même fibre, ce qui permet d'améliorer la traçabilité et la qualité des produits.

La technique d'identification de fibre proposée par la présente invention peut s'appliquer à tout type de fibre optique, tels que des fibres de ligne, des fibres amplificatrice ou des composants à fibre.

## Revendications

1. Fibre optique comportant au moins une couche de revêtement primaire, une couche de revêtement secondaire, une couche de revêtement intermédiaire située entre la couche de revêtement primaire et la couche de revêtement secondaire, la couche de revêtement intermédiaire comportant un élément colorant, les propriétés colorantes dudit élément colorant étant aptes à être modifiées par irradiation de la couche de revêtement intermédiaire par un faisceau laser pour une inscription de données, la couche de revêtement secondaire étant transparente au faisceau laser, **caractérisée en ce que** l'épaisseur de la couche de revêtement intermédiaire est inférieure à 100nm.

2. Fibre optique selon la revendication 1, **caractérisée en ce que** l'élément colorant est un colorant thermo-chrome.

3. Fibre optique selon la revendication 2, **caractérisée en ce que** l'élément colorant est un matériau à base de cyanine ou de phtalocyanine.

4. Fibre optique selon l'une quelconque des revendications précédentes, **caractérisée en ce que** l'élément colorant constitue 0.1 à 10 % en poids de l'ensemble des compositions des couches de revêtement.

5. Fibre optique selon l'une des revendications précédentes, **caractérisée en ce que** les données inscrites sont des codes barres.

6. Fibre optique selon l'une des revendications précédentes, **caractérisée en ce que** les données inscrites sont des codes visuels.

7. Fibre optique selon l'une des revendications précédentes, **caractérisée en ce que** les données inscrites sont permanentes.

8. Fibre optique selon l'une des revendications précédentes, **caractérisée en ce que** les données inscrites sont codées.

9. Fibre optique selon l'une des revendications précédentes, **caractérisée en ce que** les données inscrites sont incrémentales.

10. Câble optique comportant au moins une fibre optique selon l'une des revendications précédentes.

11. Procédé d'identification d'une fibre optique selon l'une quelconque des revendications 1 à 9, **caractérisé en ce qu'**il comporte une étape d'inscription de données par marquage laser, la couche de revêtement intermédiaire de la fibre étant irradiée par un faisceau laser modifiant les propriétés colorantes de l'élément colorant.

12. Procédé d'identification selon la revendication 11, **caractérisé en ce que** l'étape d'inscription de données est reproduite sur une même fibre plusieurs fois.

13. Procédé d'identification selon la revendication 12, **caractérisé en ce que** les données sont inscrites sur des zones adjacentes d'une même fibre.

14. Procédé d'identification selon la revendication 12, **caractérisé en ce que** les données sont inscrites sur des portions différentes d'une même fibre.

15. Procédé d'identification selon la revendication 11, **caractérisé en ce qu'**il comporte en outre une étape de lecture des données inscrites sur la couche de revêtement intermédiaire de la fibre par un lecteur laser.

16. Procédé d'identification de fibres optiques disposées dans un câble selon la revendication 10, chaque fibre comportant une couche de revêtement intermédiaire comportant un élément colorant, **caractérisé en ce qu'**il comporte une étape d'inscription de données par marquage laser, la couche de revêtement intermédiaire d'au moins une desdites fibres étant irradiée par un faisceau laser modifiant les propriétés colorantes de l'élément.

17. Procédé d'identification selon la revendication 16, **caractérisé en ce qu'**il comporte en outre une étape de lecture des données inscrites sur la couche de revêtement intermédiaire d'au moins une desdites fibre par un lecteur laser.

## Claims

1. Optical fibre including at least a primary covering layer, a secondary covering layer, and an intermediate covering layer located between the primary covering layer and the secondary covering layer, the intermediate covering layer including a colouring element, the colouring properties of said colouring element being capable of being modified by irradiation of the intermediate covering layer with a laser beam for inscription of data, the secondary covering layer being transparent to the laser beam, **characterised in that** the thickness of the intermediate covering layer is less than 100 nm.

2. Optical fibre according to claim 1, **characterised in that** the colouring element is a thermochromic colourant.

3. Optical fibre according to claim 2, **characterised in that** the colouring element is a material based on cyanine or phthalocyanine.

4. Optical fibre according to any one of the preceding claims, **characterised in that** the colouring element constitutes 0.1 to 10 %, by weight, of the entirety of the covering layer compositions.

5. Optical fibre according to one of the preceding claims, **characterised in that** the data inscribed are bar codes.

6. Optical fibre according to one of the preceding claims, **characterised in that** the data inscribed are visual codes.

7. Optical fibre according to one of the preceding claims, **characterised in that** the data inscribed are permanent.

8. Optical fibre according to one of the preceding claims, **characterised in that** the data inscribed are encoded.

9. Optical fibre according to one of the preceding claims, **characterised in that** the data inscribed are incremental.

10. Optical cable including at least one optical fibre according to one of the preceding claims.

11. Method of identifying an optical fibre according to any one of claims 1 to 9, **characterised in that** it includes a step of data inscription by means of laser marking, the intermediate covering layer of the fibre being irradiated with a laser beam modifying the colouring properties of the colouring element.

12. Identification method according to claim 11, **characterised in that** the step of data inscription is repeated a number of times on the same fibre.

13. Identification method according to claim 12, **characterised in that** the data are inscribed on adjacent zones of the same fibre.

14. Identification method according to claim 12, **characterised in that** the data are inscribed on different portions of the same fibre.

15. Identification method according to claim 11, **characterised in that** it additionally includes a step of reading data inscribed on the intermediate covering layer of the fibre by means of a laser reader.

16. Method of identifying optical fibres arranged in a cable according to claim 10, each fibre including an intermediate covering layer including a colouring element, **characterised in that** it includes a step of data inscription by means of laser marking, the intermediate covering layer of at least one of said fibres being irradiated with a laser beam modifying the colouring properties of the element.

17. Identification method according to claim 16, **characterised in that** it additionally includes a step of reading data inscribed on the intermediate covering layer of at least one of said fibres by means of a laser reader.

## Patentansprüche

1. Optische Faser umfassend mindestens eine primäre Mantelschicht, eine sekundäre Mantelschicht, eine zwischen der primären Mantelschicht und der sekundären Mantelschicht angeordnete Zwischenmantelschicht, wobei die Zwischenmantelschicht ein färbendes Element umfasst, wobei die färbenden Eigenschaften des färbenden Elements geeignet sind, durch Bestrahlung der Zwischenmantelschicht durch einen Laserstrahl für ein Einschreiben von Daten modifiziert zu werden, wobei die sekundäre Mantelschicht für den Laserstrahl transparent ist, **dadurch gekennzeichnet, dass** die Dicke der Zwischenmantelschicht kleiner als 100nm ist.

2. Optische Faser nach Anspruch 1, **dadurch gekennzeichnet, dass** das färbende Element ein thermochromes Färbemittel ist.

3. Optische Faser nach Anspruch 2, **dadurch gekennzeichnet, dass** das färbende Element ein Material auf Basis von Cyanin oder Phtalocyanin ist.

4. Optische Faser nach einem der vorhergehenden Ansprüche, **dadurch gekennzeichnet, dass** das färbende Element 0,1 bis 10 Gewichtsprozent der Gesamtheit der Zusammensetzung der Mantelschichten bildet.

5. Optische Faser nach einem der vorhergehenden Ansprüche, **dadurch gekennzeichnet, dass** die eingeschriebenen Daten Barcodes sind.

6. Optische Faser nach einem der vorhergehenden Ansprüche, **dadurch gekennzeichnet, dass** die eingeschriebenen Daten visuelle Codes sind.

7. Optische Faser nach einem der vorhergehenden Ansprüche, **dadurch gekennzeichnet, dass** die eingeschriebenen Daten permanent sind.

8. Optische Faser nach einem der vorhergehenden Ansprüche, **dadurch gekennzeichnet, dass** die eingeschriebenen Daten kodiert sind.

9. Optische Faser nach einem der vorhergehenden Ansprüche, **dadurch gekennzeichnet, dass** die eingeschriebenen Daten inkrementell sind.

10. Optisches Kabel umfassend mindestens eine optische Faser nach einem der vorhergehenden Ansprüche.

11. Verfahren zur Identifizierung einer optischen Faser nach einem der Ansprüche 1 bis 9, **dadurch gekennzeichnet, dass** es einen Schritt des Einschreibens der Daten durch Lasermarkierung umfasst, wobei die Zwischenmantelschicht der Faser durch einen Laserstrahl bestrahlt wird, welcher die färbenden Eigenschaften des färbenden Elements modifiziert.

12. Verfahren zur Identifizierung nach Anspruch 11, **dadurch gekennzeichnet, dass** der Schritt des Einschreibens der Daten bei einer einzigen Faser mehrfach reproduziert wird.

13. Verfahren zur Identifizierung nach Anspruch 12, **dadurch gekennzeichnet, dass** die Daten in benachbarte Zonen der gleichen Faser eingeschrieben werden.

14. Verfahren zur Identifizierung nach Anspruch 12, **dadurch gekennzeichnet, dass** die Daten in unterschiedliche Abschnitte der gleichen Faser eingeschrieben werden.

15. Verfahren zur Identifizierung nach Anspruch 11, **dadurch gekennzeichnet, dass** es zu dem einen Schritt des Lesens der in die Zwischenmantelschicht der Faser eingeschriebenen Daten durch einen Laserleser umfasst.

16. Verfahren zur Identifizierung von in einem Kabel nach Anspruch 10 angeordneten optischen Fasern, wobei jede Faser eine Zwischenmantelschicht umfasst, welche ein färbendes Element umfasst, **dadurch gekennzeichnet, dass** es einen Schritt des Einschreibens von Daten durch Lasermarkierung umfasst, wobei die Zwischenmantelschicht mindestens einer der Fasern durch einen Laserstrahl bestrahlt wird, welcher die färbenden Eigenschaften des Elements modifiziert.

17. Verfahren zur Identifizierung nach Anspruch 16, **dadurch gekennzeichnet, dass** es zudem einen Schritt des Lesens der auf die Zwischenmantelschicht mindestens einer der Faser eingeschriebenen Daten durch einen Laserleser umfasst.
